# EUROPEAN PATENT APPLICATION

(11) **EP 0 630 838 A1**
(43) Date of publication of application: **28.12.1994**
(21) Application number: 94303407.4
(22) Date of filing: 12.05.1994
(51) Int. Cl.: B65G 53/24, B65G 53/00

(54) **Particulate material transfer**

(30) Priority: 24.06.1993 GB 9313130
(71) Applicant: The BOC Group plc, Windlesham Surrey GU20 6HJ (GB)
(72) Inventor: Garrett, Michael Ernest, Woking, Surrey (GB); Coates, John Robert, Farnham, Surrey, GU9 9HG (GB)
(74) Representative: Gough, Peter

(57) **Abstract**

An apparatus 10 for transferring a particulate material such as sieve 16 from a first container 14 to a second container 26 without exposing the material to the atmosphere. The apparatus 10 comprises a gas circulation pump 12 for drawing gas from the first container 14 thereby to entrain the sieve, a gas/particulate separator in the form of, for example, a cyclone device 22 and a transfer tube 20 for transferring the mixture of gas and entrained material to the separator 22. An inert gas supply is connected to the first container so as to shield the sieve from the atmosphere. In operation, the vacuum acts to suck the sieve along tube 20 and into separator 22 in which sieve material is separated from the gas and passed into the second container 26 which may be a PSA plant. Separated gas and any unseparated particulate material may either be returned to the first container for re-use or directed to a second separator 32 for further separation.

## Description

The present invention relates to particulate material transfer and relates particularly but not exclusively, to the transfer of sieve material for use in a pressure swing adsorption gas separation apparatus.

It has been found that the increasing size and number of pressure swing adsorption (PSA) plants means that increasingly large quantities of molecular sieve material such as carbon and zeolite needs to be handled. Transferring the sieve from the containers in which it is transported to the PSA plant can be a lengthy task and direct contact with the atmosphere can have a deleterious effect on the sieve performance.

Sieve material is usually despatched in thick plastic or steel drums or occasionally in 1 tonne canvas bags which are lined with polythene. The latter method is usually limited to the country of origin of the sieve material because the packing method does not fully protect the sieve against the atmosphere. The filling procedure on site normally consists of emptying the drums into 1 tonne filling bags, hoisting these to the top of the plant and then trickling the sieve in. The scale of the process is illustrated by the fact that a fifty tonne per day PSA plant will require nearly one hundred tonnes of sieve to be transferred in this fashion.

It is an object of the present invention to provide a rapid and convenient means whereby sieve material can be transferred from the filling drum to the PSA plant whilst at the same time protecting the sieve from the effects of the atmosphere.

According to the present invention, there is provided an apparatus for transferring particulate material from a first container to a second container, the apparatus comprising a gas circulating pump for drawing gas from the said first container thereby to entrain the contents thereof, gas supply means for supplying an inert gas to the first container and for mixing with the contents thereof, transfer means for transferring a mixture of said gas and particulate material from the first container to a first gas/particulate separator for separating the gas from the particulate material, said separator having a first outlet communicating with the second container through which particulate material is transferred thereto and a second outlet through which any remaining particulate material and/or gas is passed for disposal or further use.

It will be appreciated that by entraining the sieve material in an inert atmosphere it will be possible to transfer particular sieve material pneumatically whilst preventing it being undesirably exposed to the atmosphere.

Advantageously, the apparatus may include a second separator for receiving gas and any unremoved particulate material from the first separator and for separating said unremoved particulate material from the gas together with a third container for receiving said previously unremoved particulate material. Such an arrangement could, for example, be used to separate out sieve of a size somewhat less than the previously separated sieve.

Conveniently, the first and/or second separator may be of the cyclone type in which the particulate material is separated from the entrained gas/particulate mixture and discharges from the bottom thereof and into said third and/or second container respectively.

Advantageously, the separated gas is returned to the first container for re-use.

The apparatus may also include flow control means for controlling the quantity of inerting gas entering the first container, thereby to replace any gas lost during operation. Additionally, a pressure control means may be provided for controlling the pressure of the gas within the apparatus.

Whilst it will be appreciated that the present invention relates to the transfer of any particulate material, it will be appreciated that it is particularly relevant to the transportation of sieve material to a pressure swing adsorption gas separator which would form the above mentioned second container.

According to another aspect of the present invention, there is provided a method of transferring particulate material from a first container to a second container comprising the steps of drawing gas from the first container thereby to entrain the contents therefore, supplying an inert gas to said first container for mixing with the contents thereof, transporting said particulate/gas mixture in said entrained state from said first container to a gas/particulate separator and separating particulate matter from said gas and supplying said separated particulate matter to the second container.

Such a method has the advantage of being able to transfer a large quantity of particulate material quite rapidly whilst also protecting it against undesirable exposure to the atmosphere.

The method may also include the further step of separating any particulate material not separated from the gas by the first separator and directing said latterly removed particulate material to a third container for use therein or disposal or re-cycling.

In order to minimise the use of gas, the separated gas is advantageously redirected to the first container for re-use.

Maximum operational control may be achieved by controlling the quantity and pressure of the gas in the apparatus.

The present invention will now be more particularly described, by way of example only, with reference to the following drawings in which:

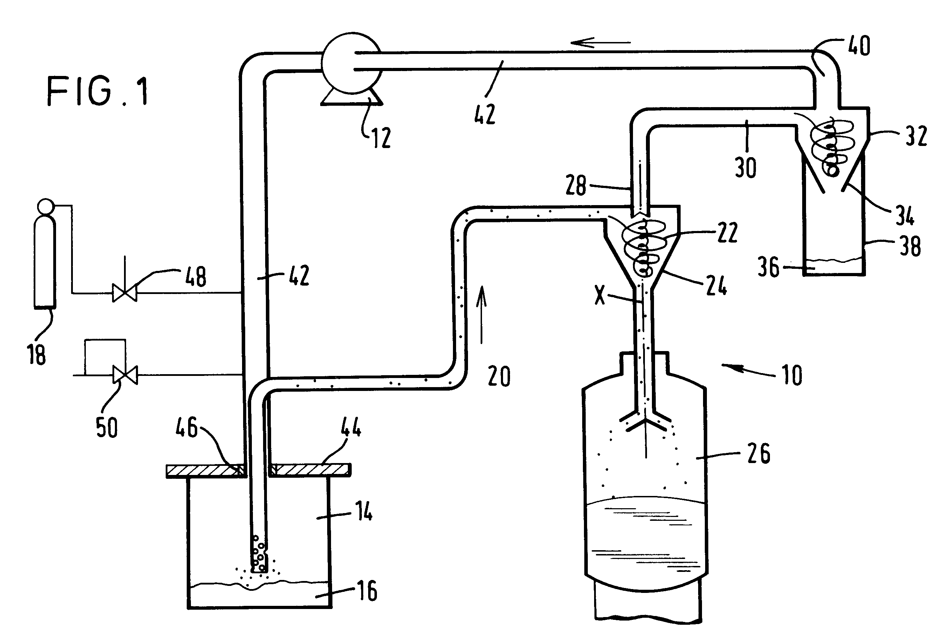

Figure 1 is a diagrammatic representation of an apparatus for transferring particulate material according to the present invention.

Referring now to Figure 1, the apparatus 10 for transferring particulate material, such as sieve for a PSA plant, comprises a vacuum means 12 for drawing gas from a first or transportation container 14 containing sieve material 16 thereby to entrain said sieve material 16 in said gas and inert gas supply means 18 such as, for example, bottled nitrogen for supplying inert gas to the first container and for mixing with the contents thereof. A transfer means in the form of pipe 20 is provided for transferring a mixture of said gas and entrained particulate material from the first container 14 to a first gas/particulate separator shown in the form of a cyclone separator 22. The cyclone separator 22 is provided with a first lower outlet 24 communicating with a second container in the form of, for example, a PSA plant 26 and through which separated particulate sieve material is passed. A second, upper, outlet 28 is provided for venting any gas and unseparated particulate material for disposal or further use.

An optional second transfer pipe 30 may be provided for transferring gas and unseparated sieve material to an optional second separator 32 or directly back to the first container for re-use. The second separator 32 may also be of the cyclone type having a first outlet 34 for allowing separated particulate material 36 to be passed to a third storage container 38 and a second outlet 40 for venting the separated gas to atmosphere or directing it back to the first container for re-use. The vacuum pump 12 is preferably situated somewhere along the length of return pipe 42 which connects the second outlet 40 of the second separator 32 with the first container.

The first container must be sealed from the atmosphere and is preferably provided with a lid 44 through which pipes 20 and 42 both pass. The pipes 20, 42 may pass through the lid in a coaxial manner, in which case only one seal 46 is required or they may enter separately in which case two seals (not shown) will be required.

A flow control means in the form of valve 48 is provided for controlling the flow of inert gas into the first container 14 and hence into the rest of the apparatus 10. A pressure control means in the form of bleed off valve 50 is provided in order to control the pressure of gas in the apparatus 10.

In operation, particulate sieve material 16 is transferred from the first container and into the PSA plant 26 by firstly drawing gas from the first container thereby to entrain the sieve material in said gas and then sucking the mixture it out of said container 14 along pipe 20 and supplying it to the first cyclone separator 22. The mixture of gas and sieve material enters the separator tangentially at the top of a long tapering cone such that the gas flow spirals down the cone and moves to the axis of the cone X discharging generally upwards out of outlet 28 whilst the particulate sieve material is discharged from the bottom of the cone through outlet 24 and cascades into the second container or PSA plant.

Any separated gas and unseparated sieve material is either directed back to the fist container 14 or to a second separator 32 where the remaining sieve material 36 is separated from the gas in the same manner as that described above and therefore not repeated here. The latterly separated sieve material may be in the form of unwanted dust or in the form of smaller sized particulate material for being supplied to a second container or a second PSA plant having a different sieve requirement.

Separator gas is returned to the first container 14 and topped up if necessary by nitrogen from container 18.

## Claims

1. An apparatus (10) for transferring particulate material from a first container (14) to a second container (16), characterised by a gas circulation pump (12) for drawing gas from said first container (14) thereby to entrain the contents thereof, gas supply means (18) for supplying an inert gas to the first container (14) and for mixing with the contents (16) thereof, transfer means (20) for transferring a mixture of said gas and particulate material from the first container (14) to a first gas/particulate separator (24) for separating the gas from the particulate material, said separator (24) having a first outlet (28) communicating with the second container (26) through which particulate material is transferred thereto and a second outlet (28) through which any remaining particulate material and/or gas is passed for disposal or further use.

2. An apparatus as claimed in Claim 1, characterised by a second separator (32) for receiving gas and any unremoved particulate material from the first separator (24) and for separating said unremoved particulate material from said gas and a third container (38) for receiving said latterly removed particulate material (36).

3. An apparatus as claimed in Claim 1 or 2, characterised in that said second and/or first separator (24, 32) is a cyclone separator in which the particulate material is separated from the fluidised gas/particulate mixture and discharges from the bottom thereof and into said third or second container respectively (38, 26).

4. An apparatus as claimed in any one of the previous claims characterised by a gas return pipe (42) for returning any separated gas to the first container (14) for re-use.

5. An apparatus as claimed in any one of the previous claims characterised by flow control means (48) for controlling the quantity of inert gas within the apparatus and for replacing any gas lost therefrom.

6. An apparatus as claimed in any one of the previous claims characterised by pressure control means (50) for controlling the pressure of the gas within the apparatus.

7. An apparatus as claimed in any one of the previous claims characterised in that the second container (26) is a pressure swing adsorption gas separator and the particulate material is sieve material.

8. A method of transferring particulate material from a first container to a second container characterised by the steps of drawing gas from said first container thereby to entrain the contents thereof, supplying an inert gas to said first container for mixing with the contents thereof, transporting said particulate/gas mixture in said entrained state from said first container to a gas/particulate separator and separating particulate material from said gas and supplying said separated particulate material to the second container.

9. A method of transferring particulate material as claimed in Claim 8, characterised by the further step of separating any particulate material not separated from the gas by the first separator and directing said latterly removed particulate material to a third container.

10. A method of transferring particulate material as claimed in Claim 8 or Claim 9, characterised by the step of returning the separated gas to the first container for re-use.

11. A method as claimed in any one of the Claims 8 to 10, characterised by the step of controlling the quantity of inert gas supplied to the first container.

12. A method as claimed in any one of Claims 8 to 11, characterised by the further step of controlling the pressure of the gas in the containers.
